Europäisches Patentamt

European Patent Office

Office européen des brevets

(11) Publication number: **0 480 442 A1**

# EUROPEAN PATENT APPLICATION

(21) Application number: **91117325.0**

(22) Date of filing: **10.10.91**

(51) Int. Cl.⁵: **G01P 3/36, G01C 19/72**

(30) Priority: **11.10.90 JP 273935/90**

(43) Date of publication of application:
**15.04.92 Bulletin 92/16**

(84) Designated Contracting States:
**DE FR GB**

(71) Applicant: **MATSUSHITA ELECTRIC INDUSTRIAL CO., LTD**
**1006, Oaza Kadoma, Kadoma-shi**
**Osaka 571(JP)**

(72) Inventor: **Takeuchi, Yoshinori**
**2-2-1-203, Toyogaoka**
**Tama-ku, Tokyo(JP)**
Inventor: **Negishi, Hidehiko**
**8-16-6, Chiyogaoka**
**Asao-ku, Kawasaki(JP)**
Inventor: **Takei, Yuko**
**1-25-8, Kami Ikedai**
**Oota-ku, Tokyo(JP)**

(74) Representative: **Dipl.-Phys.Dr. Manitz**
**Dipl.-Ing.Dipl.-Wirtsch.-Ing. Finsterwald**
**Dipl.-Phys. Rotermund Dipl.-Chem.Dr. Heyn**
**B.Sc.(Phys.) Morgan**
**Robert-Koch-Strasse 1**
**W-8000 München 22(DE)**

(54) **Sensing coil and fiber-optic gyroscope using the same.**

(57) An optical fiber sensing coil (11) incorporated in a fiber-optic gyroscope has a square shape in cross section with corners rounded so as to avoid a sharp rise in transmission loss and breakage of the sensing coil which would otherwise occur when an optical fiber of the sensing coil is bent acutely. The square sensing coil is capable of providing a greater sensitivity than a conventional hollow cylindrical sensing coil provided that the length of the optical fiber is constant. In addition, the square sensing coil is received closely in a rectangular parallelepipedic box so that the inside space of the box can be used most efficiently.

FIG. 1

## BACKGROUND OF THE INVENTION

### 1. Field of the Invention:

The present invention relates to a fiber-optic gyroscope which is expected to be used widely in automobile navigation systems and industrial robot controls.

### 2. Description of the Prior Art:

Fiber-optic gyroscopes use a sensing coil formed of an optical fiber wound around a tubular base member by plural turns. To the optical fiber sensing coil there are supplied two counter-propagating light beams, one beam propagating in the clockwise direction in the sensing coil while the other propagates in the counterclockwise direction in the sensing coil. Rotation of the sensing coil induces a phase shift between the two counter-propagating beams due to the Sagnac effect. The rotation induced phase shift is observed to measure the angular velocity of an object to which the fiber-optic gyroscope is attached. This is the principle of operation of the fiber-optic gyroscopes.

The optical fiber coil used as a sensing coil is conventionally wound around a hollow cylindrical frame or bobbin of a circular cross-section having a radius ranging from 3.0 to 20.0 cm. A superluminescent diode (SLD) or a semiconductor laser, a polarizer, fiber couplers, a phase modulator, and a photodetector are disposed inside or outside a space defined by the hollow cylindrical bobbin.

In practical use, the entire system of such a fiber-optic gyroscope must be housed in a box or case. The box is generally constructed in the shape of a rectangular parallelepiped from the point of view of utility. As against the rectangular parallelepipedic box, the sensing coil has a hollow cylindrical shape and, in order to secure an sufficient degree of sensitivity, the diameter of the hollow cylindrical sensing coil cannot be reduced to a great extent. When the hollow cylindrical sensing coil is packaged in the rectangular parallelepipedic box, the inside space of the box is used insufficiently even if at least a part of the fiber-optic gyroscope is disposed within the hollow cylindrical bobbin.

## SUMMARY OF THE INVENTION

With the foregoing drawbacks of the prior art in view, it is an object of the present invention to provide a sensing coil having structural features which enable an efficient packaging of a fiber-optic gyroscope with an increased space factor, leading to a substantial reduction in the overall size of the fiber-optic gyroscope.

Another object of the present invention is to provide a fiber-optic gyroscope which is more compact in size than, and superior in sensitivity to, the conventional fiber-optic gyroscopes.

In one aspect the present invention provides a sensing coil formed of an optical fiber for use in a fiber-optic gyroscope capable of obtaining information about the position of an object from a phase difference between two counter-propagating beams in the optical fiber induced due to the Sagnac effect. The sensing coil is wound about a winding axis to contour a polygonal shape in a plane perpendicular to the winding axis, the polygonal shape consisting of straight lines and round corners each joining two adjacent ones of the straight lines.

In another aspect the invention provides a fiber-optic gyroscope which comprises: a light source; a sensing coil formed of an optical fiber for receiving light emitted from the light source via a first predetermined optical path and for causing Sagnac effect active on the light in the optical fiber; photodetection means for detecting light emerging from the sensing coil via a second predetermined optical path; and phase modulation means for modulating the phase of light propagating in the optical fiber of the sensing coil to a predetermined phase, wherein the sensing coil is wound about a winding axis to contour a polygonal shape in a plane perpendicular to the winding axis, the polygonal shape consisting of straight lines and round corners each joining two adjacent ones of the straight lines.

The polygonal shape may be a square having round corners or a rectangle having round corners.

The optical fiber forming the square sensing coil has a length L related to the sensitivity S of the fiber-optic gyroscope such that

$$L = S(4l + 2\pi r)/[(2r + l)^2 + (\pi - 4)r^2]$$

where $l$ is the length of one side of the square, and r is the radius of curvature of round corners of the square.

The fiber-optic gyroscope may further include polarizing means disposed in the first optical path between the light source and the sensing coil and/or in the second optical path between sensing coil and the photodetection means for polarizing light passing therethrough in a predetermined direction. The light source may be a semiconductor laser or a superluminescent diode. Preferably, the light source, the photodetection means, the phase modulation means and the polarizing means are disposed in a space defined by the sensing coil.

The above and other objects, features and advantages of the present invention will become more apparent from the following description when making reference to the detailed description and the accompanying sheets of drawings in which a preferred structural embodiment incorporating the principles of the present invention is shown by way of illustrative examples.

## BRIEF DESCRIPTION OF THE DRAWINGS

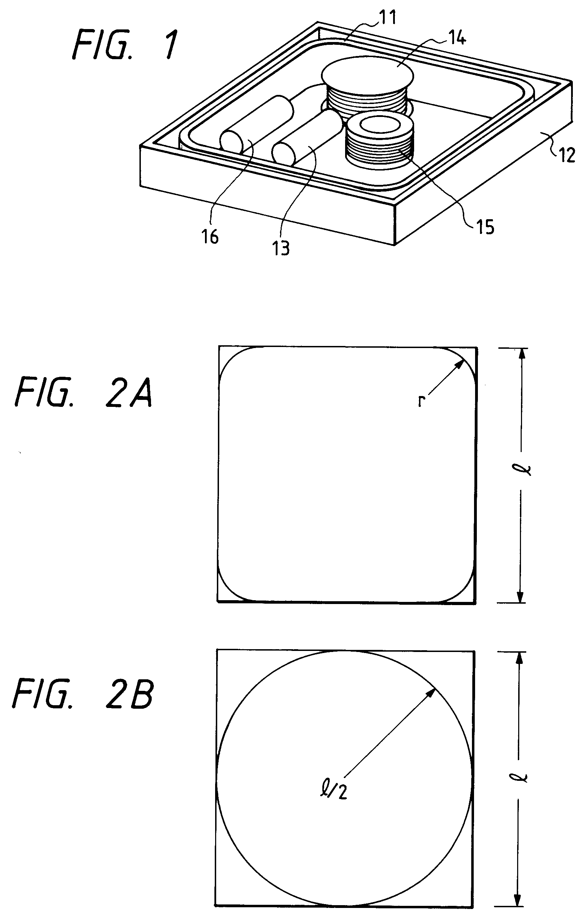

Fig. 1 is a schematic perspective view of a fiber-optic gyroscope according to this invention; and Figs. 2A and 2B are diagrammatical views explanatory of the principle of the invention.

## DETAILED DESCRIPTION OF THE INVENTION

Before describing an embodiment of this invention, an important concept of the invention will be described below in greater detail.

The sensitivity of a fiber-optic gyroscope is proportional to the product of the number of turns of a sensing coil and the cross-sectional area of the sensing coil in a place perpendicular to an axis about which an optical fiber is wound to form the sensing coil. This means that a greater sensitivity can be obtained by increasing the cross-sectional area of the sensing coil provided that the length of the optical fiber coil is constant.

When a sensing coil is to be packaged in a rectangular parallelepipedic box in such a manner as to insure a maximum sensitivity, a maximum cross-sectional area of the sensing coil must be realized. In this instance, such a maximum cross-sectional area is obtained when the sensing coil has a rectangular cross-sectional shape. However, when bent acutely to form a corner with a very small radius, the optical fiber causes a sharp rise in transmission loss and is sometimes damaged or otherwise broken. To avoid these difficulties, according to this invention, the sensing coil is so wound as to have a square or a rectangular cross-sectional shape having round corners each joining two adjacent ones of four straight sides. The sensing coil thus shaped can be disposed in the rectangular parallelepipedic box so as to extend closely along an inner peripheral surface of the box. The sensing coil may have a polygonal cross-sectional shape having five or more sides in this instance however corners of such a polygonal sensing coil are rounded at a predetermined radius of curvature to avoid transmission loss and breakage.

In the case of a sensing coil which has, as shown in Fig. 2A, a square cross-sectional shape with four sides of a length $l$ and round corners having a radius of curvature r, the length L1 of an optical fiber which is necessary to provide a sensitivity S of the gyroscope is given by

$$L1 = S(4l + 2\pi r)/[(2r + l)^2 + (\pi\text{-}4)r^2]$$

On the other hand, in the case of a conventional sensing coil having a circular shape in cross section which is inscribed in a square having sides of a length $l$, as shown in Fig. 2B, the length L2 of an optical fiber which is necessary to provide the same sensitivity S is given by

$$L2 = 4S/l$$

Comparing these two, we see that L1<L2. This means that the sensing coil according to this invention requires a shorter length of optical fiber than the conventional sensing coil when a same sensitivity is to be provided. In other words, the sensing coil of this invention is able to provide a greater sensitivity than the conventional sensing coil provided that the length of the optical fiber is constant.

With the sensing coil thus constructed, packaging of a fiber-optic gyroscope in which the sensing coil is incorporated can be performed efficiently with an increased spaced factor. Another advantage attainable by the sensing coil of this invention is that the length of the optical fiber used for the formation of the sensing coil can be substantially reduced.

Fig. 1 schematically shows a fiber-optic gyroscope embodying the invention. The fiber-optic gyroscope includes a sensing coil 11 formed of an optical fiber wound about a winding axis to form or contour a square shape in a plane perpendicular to the winding axis. The sensing coil 11 having a square cross-sectional shape is packaged in a rectangular parallelepipedic box 12. The box 12 has a size of 150 mm x 150 mm x 25 mm. The sensing coil 11 has a height of 20 mm and its square cross-sectional shape has a size of 140 mm x 140 mm and includes round corners having a radius of curvature of 15 mm. A light source 13 composed of a superluminescent diode, a polarizer 14, a phase modulator 15 and a photodetector 16 are disposed within a space defined by the sensing coil 11 in the box 12. The light source 3 may be a semiconductor laser. The polarizer 14 is disposed in an optical path between the light source 13 and the sensing coil 11 and/or in an optical path between the sensing coil 11 and the photodetector 16. In the embodiment shown in Fig. 1, these two optical paths are overlapped or partly coincide with each other, so that only one such polarizer 14 suffices to perform a given operation. More specifically, the polarizer 14 is provided to confine the direction of polarization of a light beam to one direction when the light beam passes in a direction toward the sensing loop and pick up from a light beam passing in a direction toward the photodetector, a component of the light beam which is polarized in the same direction as the direction of polarization of the light beam passing in the sensing loop direction. The phase modulator 15 is disposed adjacent to the sensing coil 11 for accomplishing phase modulation of light passing through the sensing coil 11.

The optical fiber used for the formation of the sensing coil 11 has a length of 165 m. In case where a hollow cylindrical sensing coil having a diameter of 140 mm is used, the same sensitivity is obtained when an optical fiber used for forming this hollow cylindrical sensing coil have a length of 171 m. Apparently, the optical fiber of the hollow cylindrical sensing coil is longer than the optical fiber of the square sensing coil 11 according to this invention. In addition, the square sensing coil 11 defines a greater space available for packaging necessary optical components of the fiber-optic gyroscope, than a space defined by the hollow cylindrical sensing coil for the same purpose. This is contributive to the efficient packaging of the gyroscope in the box 12 and the reduction of the overall size of the gyroscope.

Obviously, various minor changes and modifications of the present invention are possible in the light of the above teaching. It is therefore to be understood that within the scope of the appended claims the invention may be practiced otherwise than as specifically described.

## Claims

1. A sensing coil (11) formed of an optical fiber for use in a fiber-optic gyroscope capable of obtaining information about the position of an object from a phase difference between two counter-propagating beams in said optical fiber induced due to the Sagnac effect, said sensing coil being wound about a winding axis to contour a polygonal shape in a plane perpendicular to said winding axis, said polygonal shape consisting of straight lines and round corners each joining two adjacent ones of the straight lines.

2. A sensing coil according to claim 1, wherein said polygonal shape is a square having round corners.

3. A sensing coil according to claim 2, wherein said optical fiber forming said square sensing coil (11) has a length L related to the sensitivity S of said fiber-optic gyroscope such that

$$L = S(4l + 2\pi r)/[(2r + l)^2 + (\pi-4)r^2]$$

where $l$ is the length of one side of said square, and r is the radius of curvature of round corners of said square.

4. A sensing coil according to claim 1, wherein said polygonal shape is a rectangle having round corners.

5. A fiber-optic gyroscope comprising a light source (13), a sensing coil (11) formed of an optical fiber for receiving light emitted from said light source (13) via a first predetermined optical path and for causing Sagnac effect active on the light in said optical fiber, photodetection means (16) for detecting light emerging from said sensing coil (11) via a second predetermined optical path, and phase modulation means (15) for modulating the phase of light propagating in said optical fiber of said sensing coil (11) to a predetermined phase, characterized in that said sensing coil (11) is wound about a winding axis to contour a polygonal shape in a plane perpendicular to said winding axis, said polygonal shape consisting of straight lines and round corners each joining two adjacent ones of the straight lines.

6. A fiber-optic gyroscope according to claim 5, wherein said polygonal shape is a square having round corners.

7. A fiber-optic gyroscope-according to claim 6, wherein said fiber-optic gyroscope has a sensitivity S for obtaining information about the position of an object, said optical fiber of said sensing coil (11) having a length L related to the sensitivity S such that

$$L = S(4l + 2\pi r)/[(2r + l)^2 + (\pi-4)r^2]$$

where $l$ is the length of one side of said square, and r is the radius of curvature of round corners of said square.

8. A fiber-optic gyroscope according to claim 5, wherein said polygonal shape is a rectangle having round corners.

9. A fiber-optic gyroscope according to claim 5, further comprising polarizing means (14) disposed in said first optical path between said light source (13) and said sensing coil (11) and/or in said second optical path between sensing coil (11) and said photodetection means (16) for polarizing light passing therethrough in a predetermined direction.

10. A fiber-optic gyroscope according to claim 9, wherein said light source (13) comprises a semiconductor laser or a superluminescent diode.

7      EP 0 480 442 A1      8

11. A fiber-optic gyroscope according to claim 9 or 10, wherein said light source (13), said photodetection means (16), said phase modulation means (15) and said polarizing means (14) are disposed in a space defined by said sensing coil (11).

FIG. 1

FIG. 2A

FIG. 2B

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | PATENT ABSTRACTS OF JAPAN vol. 14, no. 101 (P-1012)(4044) 23 February 1990 & JP-A-1 305 311 ( JAPAN AVIATION ELECTRON ) 8 December  1989 | 1,5 | G01P3/36 G01C19/72 |
| Y | | 4,8,11 | |
| A | * abstract * | 2,6 | |
| Y | PATENT ABSTRACTS OF JAPAN vol. 12, no. 224 (P-721)(3071) 25 June 1988 & JP-A-63 018 216 ( MITSUBISHI HEAVY IND LTD ) 26 January  1988 * abstract * | 4,8 | |
| Y | EP-A-0 383 231 (JAPAN AVIATON ELECTRONICS IND LTD) 22 August 1990 | 11 | |
| A | * column 1, line 15 - line 22 * * column 5, line 11 - column 6, line 9; figures 1,4 * | 10 | |
| A | PATENT ABSTRACTS OF JAPAN vol. 14, no. 165 (P-1030)(4108) 30 March 1990 & JP-A-2 021 213 ( JAPAN AVIATION ELECTRON ) 24 January  1990 * abstract * | 9,11 | **TECHNICAL FIELDS SEARCHED (Int. Cl.5 )** G01P G01C |

The present search report has been drawn up for all claims

| Place of search | Date of completion of the search | Examiner |
|---|---|---|
| THE HAGUE | 23 JANUARY 1992 | HANSEN P. |